(19) Europäisches Patentamt
European Patent Office
Office européen des brevets

(11) **EP 4 572 458 A1**

(12) **EUROPEAN PATENT APPLICATION**
published in accordance with Art. 153(4) EPC

(43) Date of publication:
**18.06.2025 Bulletin 2025/25**

(21) Application number: **22954669.2**

(22) Date of filing: **12.08.2022**

(51) International Patent Classification (IPC):
**H04W 72/04** (2023.01)

(52) Cooperative Patent Classification (CPC):
**H04W 72/04**

(86) International application number:
**PCT/CN2022/112320**

(87) International publication number:
**WO 2024/031719 (15.02.2024 Gazette 2024/07)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Beijing Xiaomi Mobile Software Co., Ltd.**
**Beijing 100085 (CN)**

(72) Inventor: **GAO, Xueyuan**
**Beijing 100085 (CN)**

(74) Representative: **Stöckeler, Ferdinand et al**
**Schoppe, Zimmermann, Stöckeler**
**Zinkler, Schenk & Partner mbB**
**Patentanwälte**
**Radlkoferstrasse 2**
**81373 München (DE)**

(54) **PRECODING INDICATION METHOD AND APPARATUS SUPPORTING 8TX CODEBOOK-BASED PUSCH TRANSMISSION**

(57) Disclosed in embodiments of the present application are a precoding indication method and apparatus supporting 8Tx codebook-based PUSCH transmission, applicable to communication systems such as 5G new radio (NR) systems or other novel mobile communication systems in future. The method includes: determining at least one sounding reference signal (SRS) resource set which is used for a terminal device and functions as a "codebook", wherein the plurality of SRS resources form an SRS resource group which is used for uplink channel sounding and corresponds to eight SRS antenna ports; and sending an SRS resource indicator (SRI) to the terminal device. By implementing the embodiments of the present application, a network side device determines at least one SRS resource set which functions as a "codebook", and indicates, by means of an SRI, an SRS resource group which corresponds to eight SRS antenna ports and is used by the terminal device for PUSCH sending, so as to support codebook-based PUSCH sending in the case of eight SRS ports, thereby supporting 8Tx codebook-based transmission using SRS resources defined in existing protocols, preventing the redefining of 8-port SRS resources, and more flexibly implementing SRS resource utilization.

determining at least one sounding reference signal (SRS) resource set having a function of a codebook for a terminal — S201

↓

sending an SRS resource indication (SRI) to the terminal — S202

FIG. 2

EP 4 572 458 A1

## Description

### FIELD

The present invention relates to the field of communication technologies, and in particular to a precoding indication method and apparatus for supporting 8Tx non-codebook-based physical uplink shared channel (PUSCH) transmission.

### BACKGROUND

In wireless communication, a non-codebook uplink transmission solution is a spatial multiplexing technology. Difference between non-codebook-based uplink transmission and codebook-based uplink transmission is that precoding of the non-codebook-based uplink transmission is obtained based on criteria, rather than based on a fixed codebook among limited candidates. Compared with the codebook-based transmission solution, the overhead of precoding indication may be saved while obtaining better performance.

The more layers configured for uplink transmission for a terminal, the faster the uplink transmission speed. Current protocols support relatively few layers of non-codebook uplink transmission, making it difficult to obtain a higher uplink transmission speed.

### SUMMARY

Embodiments of the present invention provide a precoding indication method and apparatus for supporting 8Tx codebook-based PUSCH transmission, which may be applied to a communication system, such as a long term evolution (LTE) system, a fifth generation (5G) mobile communication system, a 5G new radio (NR) system, or any other future new mobile communication system. A network device determine at least one sounding reference signal (SRS) resource set with the same function as "codebook", and an SRS resource group containing multiple SRS resources for PUSCH transmission is indicated to a terminal via a sounding resource indicator (SRI), to realize support of codebook-based PUSCH transmission in a case of 8 SRS ports. The 8-port SRS function is realized by utilizing a combination of the existing SRS resource(s), thus avoiding defining a new 8-port SRI mapping table, reducing standardization difficulty and workload, and improving an uplink transmission speed.

According to a first aspect of embodiments of the present invention, there is provided a precoding indication method for supporting 8Tx codebook-based PUSCH transmission, including: determining at least one sounding reference signal (SRS) resource set having a function of a codebook for a terminal, where each SRS resource set includes a plurality of SRS resources, and the plurality of SRS resources constitute an SRS resource group for uplink channel sounding and corresponding to 8 SRS antenna ports; and sending an SRS resource indication (SRI) to the terminal, where the SRI indicates a spatial filtration beam used for PUSCH transmission corresponding to an SRS resource set of the at least one SRS resource set.

Optionally, the method further includes: obtaining capability information of the terminal sent by the terminal, where the at least one SRS resource set is determined according to the capability information of the terminal.

Optionally, the capability information of the terminal includes full coherent, partial coherent or non-coherent.

Optionally, the plurality of SRS resources include one or more of: a single-port SRS resource; a 2-port SRS resource; or a 4-port SRS resource.

Optionally, each SRS resource of the plurality of SRS resources includes a combination of SRS resources with the same port numeric count, or a combination of SRS resources with different port numeric counts.

Optionally, the plurality of SRS resources include one of: a combination of two 4-port SRS resources; a combination of one 4-port SRS resource and two 2-port SRS resources; a combination of four 2-port SRS resources; or a combination of eight single-port SRS resources.

Optionally, the method further includes: sending an SRI table to the terminal, where the SRI table includes a correspondence between an SRI and an SRS resource set, and a numeric count of bits of an SRI indication field of the SRI is determined by $N_{SRS}$ representing a numeric count of SRS resource sets configured for the terminal.

Optionally, the method further includes: sending bitmap information to the terminal, where a bit in the bitmap information has a predefined correspondence with a respective SRS resource set configured, the SRI indicates an SRS resource set selected by precoding indication in line with the predefined correspondence, and is used to instruct the terminal to use a spatial filtration beam corresponding to the SRS resource set during the PUSCH transmission.

Optionally, a numeric count of bits of an SRI indication field is determined by $N_{SRS}$ representing a numeric count of SRS resource sets configured for the terminal.

Optionally, the plurality of SRS resource sets each are configured as one of: a periodic SRS resource set; a semi-persistent SRS resource set; or an aperiodic SRS resource set.

According to a second aspect of embodiments of the present invention, there is provided a precoding indication method for supporting 8Tx codebook-based PUSCH transmission, including: receiving a sounding reference signal (SRS) resource indication (SRI) sent by a network device, where the SRI indicates a spatial filtration beam used for PUSCH transmission corresponding to an SRS resource set of at least one SRS resource set.

Optionally, the method further includes: sending capability information of the terminal to the network device, where the at least one SRS resource set is determined according to the capability information of the terminal.

Optionally, the capability information of the terminal includes full coherent, partial coherent or non-coherent.

Optionally, the method further includes: receiving an SRI table sent by the network device, where the SRI table includes a correspondence between an SRI and an SRS resource set, and a numeric count of bits of an SRI indication field of the SRI is determined by $N_{SRS}$ representing a numeric count of SRS resource sets configured for the terminal.

Optionally, the method further includes: receiving bitmap information sent by the network device, where a bit in the bitmap information has a predefined correspondence with a configured SRS resource set, the SRI indicates an SRS resource set selected by precoding indication in line with the predefined correspondence, and is used to instruct the terminal to use a spatial filtration beam corresponding to the SRS resource set during the PUSCH transmission.

Optionally, a numeric count of bits of an SRI indication field is determined by $N_{SRS}$ representing a numeric count of SRS resource sets configured for the terminal.

Optionally, the plurality of SRS resource sets each are configured as one of: a periodic SRS resource set; a semi-persistent SRS resource set; or an aperiodic SRS resource set.

According to a third aspect of embodiments of the present invention, there is provided a communication device, having some or all functions of the terminal for realizing the method described in the first aspect. For example, the function of the device may be the function for realizing part or all of the embodiments of the present invention, or may be the function for separately realizing any one of the embodiments of the present invention. The functions described above may be implemented by hardware, or may be implemented by software executed by corresponding hardware. The hardware or software includes at least one unit or module corresponding to the above functions.

In an embodiment of the present invention, a structure of the communication device may include a transceiving module and a processing module, and the processing module is configured to support the communication device to perform corresponding functions in the above method. The transceiving module is configured to support communication between the communication device and other devices. The communication device may further include a storage module coupled to the transceiving module and the processing module, which stores necessary computer programs and data for the communication device.

For example, the processing module may be a processor, the transceiving module may be a transceiver or a communication interface, and the storage module may be a memory.

In an embodiment, the communication device includes: a processing module configured to determine at least one sounding reference signal (SRS) resource set having a function of a codebook for a terminal, where each SRS resource set includes a plurality of SRS resources, and the plurality of SRS resources constitute an SRS resource group for uplink channel sounding and corresponding to 8 SRS antenna ports; and a first transceiving module configured to send an SRS resource indication (SRI) to the terminal, where the SRI indicates a spatial filtration beam used for PUSCH transmission corresponding to an SRS resource set of the at least one SRS resource set.

According to a fourth aspect of embodiments of the present invention, there is provided a communication device, having some or all functions of the network device for realizing the method described in the second aspect. For example, the function of the device may be the function for realizing part or all of the embodiments of the present invention, or may be the function for separately realizing any one of the embodiments of the present invention. The functions described above may be implemented by hardware, or may be implemented by software executed by corresponding hardware. The hardware or software includes at least one unit or module corresponding to the above functions.

In an embodiment of the present invention, a structure of the communication device may include a transceiving module and a processing module, and the processing module is configured to support the communication device to perform corresponding functions in the above method. The transceiving module is configured to support communication between the communication device and other devices. The communication device may further include a storage module coupled to the transceiving module and the processing module, which stores necessary computer programs and data for the communication device.

For example, the processing module may be a processor, the transceiving module may be a transceiver or a communication interface, and the storage module may be a memory.

In an embodiment, the communication device includes: a second transceiving module configured to receive a sounding reference signal (SRS) resource indication (SRI) sent by a network device, where the SRI indicates a spatial filtration beam used for PUSCH transmission corresponding to an SRS resource set of at least one SRS resource set.

According to a fifth aspect of embodiments of the present invention, there is provided a communication device including a processor. When the processor invokes a computer program stored in a memory, the precoding indication method for supporting 8Tx codebook-based PUSCH transmission described in the first aspect is performed.

According to a sixth aspect of embodiments of the present invention, there is provided a communication device including a processor. When the processor invokes a computer program stored in a memory, the precoding indication method for supporting 8Tx codebook-based PUSCH transmission described in the second aspect is performed.

According to a seventh aspect of embodiments of the present invention, there is provided a communication device. The communication device includes a processor and a memory storing a computer program that, when executed by the processor, causes the communication device to perform the method described in the first aspect.

According to an eighth aspect of embodiments of the present invention, there is provided a communication device. The communication device includes a processor and a memory storing a computer program that, when executed by the processor, causes the communication device to perform the method described in the second aspect.

According to a ninth aspect of embodiments of the present invention, there is provided a communication device. The communication device includes a processor and an interface circuit. The interface circuit is configured to receive code instructions and transmit them to the processor. The processor is configured to run the code instructions to cause the device to perform the method described in the first aspect.

According to a tenth aspect of embodiments of the present invention, there is provided a communication device. The communication device includes a processor and an interface circuit. The interface circuit is configured to receive code instructions and transmit them to the processor. The processor is configured to run the code instructions to cause the device to perform the method described in the second aspect.

According to an eleventh aspect of embodiments of the present invention, there is provided a precoding indication system for supporting 8Tx codebook-based PUSCH transmission. The system includes the communication device described in the third aspect and the communication device described in the fourth aspect, or the communication device described in the fifth aspect and the communication device described in the sixth aspect, or the communication device described in the seventh aspect and the communication device described in the eighth aspect, or the communication device described in the ninth aspect and the communication device described in the tenth aspect.

According to a twelfth aspect of embodiments of the present invention, there is provided a computer-readable storage medium having stored therein instructions for the above terminal. When the instructions are executed, the terminal performs the method described in the first aspect.

According to a thirteenth aspect of embodiments of the present invention, there is provided a readable storage medium having stored therein instructions for the above network device. When the instructions are executed, the network device performs the method described in the second aspect.

According to a fourteenth aspect of embodiments of the present invention, there is provided a computer program product including a computer program that, when run on a computer, causes the computer to perform the method described in the first aspect.

According to a fifteenth aspect of embodiments of the present invention, there is provided a computer program product including a computer program that, when run on a computer, causes the computer to perform the method described in the second aspect.

According to a sixteenth aspect of embodiments of the present invention, there is provided a chip system, including at least one processor and an interface, configured to support the terminal to realize the functions involved in the first aspect, for example, determine or process at least one of data and information involved in the above method. In a possible design, the chip system further includes a memory, and the memory is configured to store necessary computer programs and data of the terminal. The chip system may be formed by a chip, or may include a chip and other discrete devices.

According to a seventeenth aspect of embodiments of the present invention, there is provided a chip system, including at least one processor and an interface, configured to support the network device to realize the functions involved in the second aspect, for example, determine or process at least one of data and information involved in the above method. In a possible design, the chip system further includes a memory, and the memory is configured to store necessary computer programs and data of the network device. The chip system may be formed by a chip, or may include a chip and other discrete devices.

According to an eighteenth aspect of embodiments of the present invention, there is provided a computer program that, when run on a computer, causes the computer to perform the method described in the first aspect.

According to a nineteenth aspect of embodiments of the present invention, there is provided a computer program that, when run on a computer, causes the computer to perform the method described in the second aspect.

**BRIEF DESCRIPTION OF THE DRAWINGS**

In order to more clearly illustrate technical solutions in embodiments of the present invention or in the background, drawings required to be used in the embodiments of the present invention or in the background will be described below.

FIG. 1 is a schematic diagram of an architecture of a communication system provided by an embodiment of the present invention.

FIG. 2 is a flowchart of a precoding indication method for supporting 8Tx codebook-based PUSCH transmission provided by an embodiment of the present invention.

FIG. 3 is a flowchart of a precoding indication method for supporting 8Tx codebook-based PUSCH transmission provided by another embodiment of the present invention.

FIG. 4 is a flowchart of a precoding indication method for supporting 8Tx codebook-based PUSCH transmission provided by a further embodiment of the present invention.

FIG. 5 is a flowchart of a precoding indication method for supporting 8Tx codebook-based PUSCH transmission provided by a further embodiment of the present invention.

FIG. 6 is a flowchart of a precoding indication method for supporting 8Tx codebook-based PUSCH transmission provided by a further embodiment of the present invention.

FIG. 7 is a flowchart of a precoding indication method for supporting 8Tx codebook-based PUSCH transmission provided by a further embodiment of the present invention.

FIG. 8 is a flowchart of a precoding indication method for supporting 8Tx codebook-based PUSCH transmission provided by a further embodiment of the present invention.

FIG. 9 is a flowchart of a precoding indication method for supporting 8Tx codebook-based PUSCH transmission provided by a further embodiment of the present invention.

FIG. 10 is a block diagram of a communication device provided by an embodiment of the present invention.

FIG. 11 is a block diagram of a communication device provided by another embodiment of the present invention.

FIG. 12 is a block diagram of a chip provided by an embodiment of the present invention.

## DETAILED DESCRIPTION

For ease of understanding, terminologies involved in the present invention is first introduced.

Sounding reference signal (SRS)

A reference signal (RS) includes a channel state information reference signal (CSI-RS), a sounding reference signal (SRS), a positioning reference signal (PRS), and a tracking reference signal (TRS). The SRS may be an SRS with a function of "codebook" or "non-codebook" or an SRS with a function of "antenna switching".

In a wireless communication network, an evolved node B (eNodeB) usually allocates a part of system bandwidth to a user equipment (UE). That is, a specific frequency domain resource is allocated to the UE at a specific time. The eNodeB learns about a part with a higher quality in the specific frequency domain through the SRS, and allocates it to the UE first, so that a service quality of the UE is well-guaranteed. The SRS is used to provide a reference for the eNodeB to schedule resources.

In order to better understand the precoding indication method for supporting 8Tx codebook-based PUSCH transmission disclosed in the embodiments of the present invention, the communication system to which the embodiments of the present invention are applicable is firstly described below.

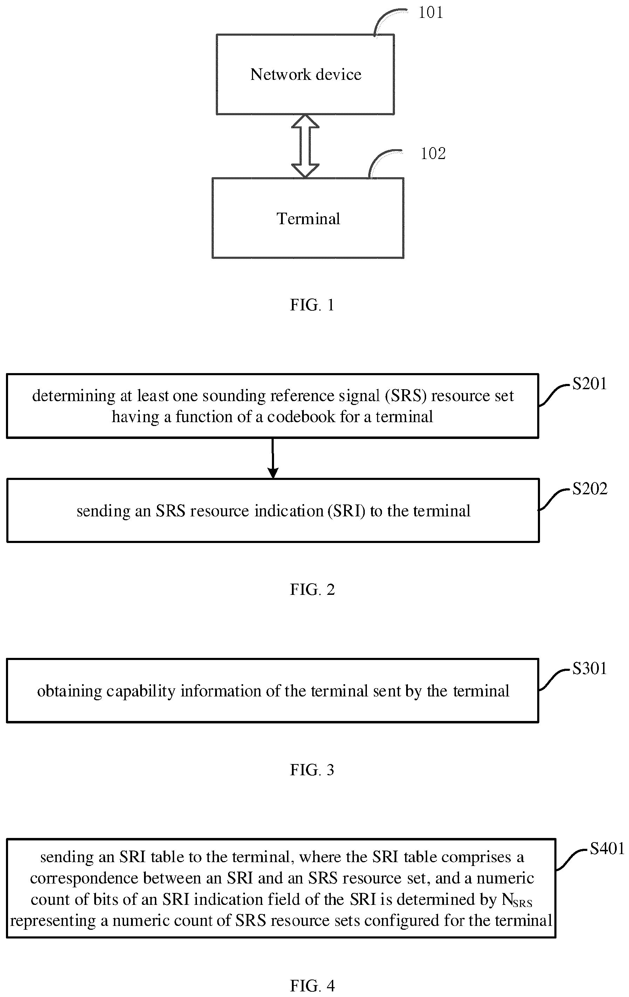

Referring to FIG. 1, FIG. 1 is a schematic diagram of an architecture of a communication system provided by an embodiment of the present invention. The communication system may include, but not limited to, a network device and a terminal. The number and form of the devices shown in FIG. 1 are only example and do not constitute a limitation to the embodiments of the present invention. In practical applications, the system may include two or more network devices, and two or more terminals. In an example, the communication system shown in FIG. 1 includes one network device 101 and one terminal 102.

It should be noted that the technical solutions of the embodiments of the present invention may be applied to various communication systems, for example, a long term evolution (LTE) system, a fifth generation (5G) mobile communication system, a 5G new radio (NR) system, or other future new mobile communication systems. It should be noted that sidelink in the embodiments of the present invention may also be called a side link or a direct link.

The network device 101 in the embodiments of the present invention is an entity at a network side for transmitting or receiving signals. For example, the network device 101 may be an evolved NodeB (eNB), a transmission reception point (TRP), a next generation NodeB (gNB) in an NR system, a base station in other future mobile communication systems, or a wireless fidelity (Wi-Fi) access nodes in the system. Specific technologies and specific device forms adopted by the network device are not limited in the embodiments of the present invention.

The network device provided in the embodiments of the present invention may be composed of a central unit (CU) and a distributed unit (DU), where the CU may also be called a control unit. The CU-DU structure may divide the network device, such as protocol layers of the base station, and functions of some protocol layers are arranged in the CU for centralized control, and functions of a part of or all the remaining protocol layers are distributed in the DU(s), and the CU centrally controls the DU(s).

The terminal 102 in the embodiments of the present invention is an entity at a user side for receiving or transmitting signals, such as a mobile phone. The terminal may also be called a terminal device, a user equipment (UE), a mobile station (MS), and a mobile terminal (MT). The terminal may be a car with a communication function, a smart car, a mobile phone, a wearable device, a pad, a computer with a wireless transceiver function, a virtual reality (VR) terminal, an augmented reality (AR) terminal, a wireless terminal in an industrial control, a wireless terminal in self-driving, a wireless terminal in a remote medical surgery, a wireless terminal in a smart grid, a wireless terminal in safe transportation, a wireless terminal in a smart city, or a wireless terminal in a smart home. Specific technologies and specific device forms adopted by the terminal are not limited in the embodiments of the present invention.

In the wireless communication, multi-antenna precoding of physical uplink shared channel (PUSCH) supports two different mode configurations, one is codebook-based transmission, and the other is non-codebook-based transmission. In the codebook-based PUSCH transmission in the NR, the terminal configures at most one SRS resource set for the codebook-based uplink transmission. The SRS resource set may be configured with a plurality of SRS resources. The network side will instruct the terminal with a sounding resource indicator (SRI) corresponding to the SRS resource set. The SRI is indicated for selection of SRS resource(s). Similarly, based on measurement of uplink channel state information (CSI) by a base station, the network determines a transmitted precoding matrix indicator (TPMI) and a numeric count of transmission layers (i.e., a rank indication (RI)) used by the terminal for transmission and inform the terminal of them. Data in pending uplink transmission of the terminal needs to be precoded using the PMI and the RI specified by the network side. The precoded data is mapped to an antenna port according to a spatial filter SpatialRelationInfo corresponding to an SRS resource indicated by the SRI. Different SRSs correspond to different spatial filters, so the precoded data of the terminal needs to be filtered by the spatial filter used by the SRS indicated by the SRI. In this way, uplink data transmission from a single layer to full rank may be supported. In a current version of the NR system, the uplink data transmission may be supported up to 4 layers.

Table 1

| SRI index | SRI(s), $N_{SRS} = 2$ |
|---|---|
| 0 | 0 |
| 1 | 1 |

Table 2

| SRI index | SRI(s), $N_{SRS} = 3$ |
|---|---|
| 0 | 0 |
| 1 | 1 |
| 2 | 2 |
| 3 | Reserved |

Table 3

| SRI index | SRI(s), $N_{SRS} = 4$ |
|---|---|
| 0 | 0 |
| 1 | 1 |
| 2 | 2 |
| 3 | 3 |

Table 1, Table 2 and Table 3 are used as examples to provide an SRI table. The SRI table includes correspondence between the SRI index and the SRS resource in the SRS resource set, and a numeric count of bits in an SRI indication field of the SRI is determined by $N_{SRS}$. $N_{SRS}$ is a numeric count of SRS resources configured for the terminal correspondingly.

Table 4

| Bit field index | Codebook subset = full coherent, partial coherent and non-coherent | Bit field index | Codebook subset = partial coherent and non-coherent | Bit field index | Codebook subset = non-coherent |
|---|---|---|---|---|---|
| 0 | 1 layer: TPMI=0 | 0 | 1 layer: TPMI=0 | 0 | 1 layer: TPMI=0 |
| 1 | 1 layer: TPMI=1 | 1 | 1 layer: TPMI=1 | 1 | 1 layer: TPMI=1 |
| ... | ... | ... | ... | ... | ... |
| 3 | 1 layer: TPMI=3 | 3 | 1 layer: TPMI=3 | 3 | 1 layer: TPMI=3 |
| 4 | 1 layer: TPMI=4 | 4 | 1 layer: TPMI=4 | | |
| ... | ... | ... | ... | | |
| 11 | 1 layer: TPMI=11 | 11 | 1 layer: TPMI=11 | | |
| 12 | 1 layers: TPMI=12 | 12-15 | reserved | | |
| ... | ... | | | | |
| 27 | 1 layers: TPMI=27 | | | | |
| 28-31 | reserved | | | | |

Table 4 shows an example of 4 antenna ports and provides a signaling indication manner of the TPMI and the RI for single-layer transmission. The indication is based on different terminal capabilities. Herein, the terminal capabilities are divided into three types, i.e., full coherent, partial coherent and non-coherent, which represent a correlation capability of the antenna port.

Table 5

| TPMI index | W | | | | | | | |
|---|---|---|---|---|---|---|---|---|
| 0-7 | $\frac{1}{2}\begin{bmatrix}1\\0\\0\\0\end{bmatrix}$ | $\frac{1}{2}\begin{bmatrix}0\\1\\0\\0\end{bmatrix}$ | $\frac{1}{2}\begin{bmatrix}0\\0\\1\\0\end{bmatrix}$ | $\frac{1}{2}\begin{bmatrix}0\\0\\0\\1\end{bmatrix}$ | $\frac{1}{2}\begin{bmatrix}1\\0\\1\\0\end{bmatrix}$ | $\frac{1}{2}\begin{bmatrix}1\\0\\-1\\0\end{bmatrix}$ | $\frac{1}{2}\begin{bmatrix}1\\0\\j\\0\end{bmatrix}$ | $\frac{1}{2}\begin{bmatrix}1\\0\\-j\\0\end{bmatrix}$ |
| 8-15 | $\frac{1}{2}\begin{bmatrix}0\\1\\0\\1\end{bmatrix}$ | $\frac{1}{2}\begin{bmatrix}0\\1\\0\\-1\end{bmatrix}$ | $\frac{1}{2}\begin{bmatrix}0\\1\\0\\j\end{bmatrix}$ | $\frac{1}{2}\begin{bmatrix}0\\1\\0\\-j\end{bmatrix}$ | $\frac{1}{2}\begin{bmatrix}1\\1\\1\\-1\end{bmatrix}$ | $\frac{1}{2}\begin{bmatrix}1\\1\\j\\j\end{bmatrix}$ | $\frac{1}{2}\begin{bmatrix}1\\1\\-1\\1\end{bmatrix}$ | $\frac{1}{2}\begin{bmatrix}1\\1\\-j\\-j\end{bmatrix}$ |
| 16 - 23 | $\frac{1}{2}\begin{bmatrix}1\\j\\1\\j\end{bmatrix}$ | $\frac{1}{2}\begin{bmatrix}1\\j\\j\\1\end{bmatrix}$ | $\frac{1}{2}\begin{bmatrix}1\\j\\-1\\-j\end{bmatrix}$ | $\frac{1}{2}\begin{bmatrix}1\\j\\-j\\-1\end{bmatrix}$ | $\frac{1}{2}\begin{bmatrix}1\\-1\\1\\1\end{bmatrix}$ | $\frac{1}{2}\begin{bmatrix}1\\-1\\j\\-j\end{bmatrix}$ | $\frac{1}{2}\begin{bmatrix}1\\-1\\-1\\-1\end{bmatrix}$ | $\frac{1}{2}\begin{bmatrix}1\\-1\\-j\\j\end{bmatrix}$ |
| 24 - 27 | $\frac{1}{2}\begin{bmatrix}1\\-j\\1\\-j\end{bmatrix}$ | $\frac{1}{2}\begin{bmatrix}1\\-j\\j\\-1\end{bmatrix}$ | $\frac{1}{2}\begin{bmatrix}1\\-j\\-1\\j\end{bmatrix}$ | $\frac{1}{2}\begin{bmatrix}1\\-j\\-j\\1\end{bmatrix}$ | - | - | - | - |

Table 5 shows codewords, precoding information (i.e., TPMI) and transmission layer number (i.e., RI) used for single-layer transmission using 4 antenna ports. This table is for a case where a cyclic prefix orthogonal frequency division multiplexing (CP-OFDM) waveform is used and a case where DFTs-OFDM precoding is not used and the RI is 1. In this table, W represents a matrix, a TPMI index is in an increasing order from left to right, j in the matrix is a negative number, and 1/2 located before a matrix in multiplication represents a normalization coefficient of the matrix.

A numeric count of transmission layers is equal to a rank of a channel matrix, that is, data streams that may be transmitted independently in parallel. A numeric count of layers is indicated by the RI, and the terminal informs the network device of the maximum number of uplink PUSCH transmission layers that can be supported. The supported RI is limited by a numeric count of transmitter antennas. If the transmitter antennas are at most two antennas, the maximum rank is 2.

Not all terminals can calibrate each antenna port to enable coherent transmission, so codebook design for uplink transmission needs to consider the antenna coherent transmission capability of the terminal.

It can be understood that the communication system described in the embodiments of the present invention is used to clearly illustrate technical solutions of the embodiments of the present invention, and does not constitute a limitation on the technical solutions provided by the embodiments of the present invention. Those ordinary skilled in the art understand that with the evolution of the system architecture and the emergence of new business scenarios, the technical solutions provided in the embodiments of the present invention are also applicable to similar technical problems.

A precoding indication method and apparatus for supporting 8Tx codebook-based PUSCH transmission provided by the present invention will be described in detail below with reference to the accompanying drawings.

Referring to FIG. 2, FIG. 2 is a flowchart of a precoding indication method for supporting 8Tx codebook-based PUSCH transmission provided by an embodiment of the present invention. The method is performed by a network device. As shown in FIG. 2, the method includes, but is not limited to, the following steps.

In step S201, at least one sounding reference signal (SRS) resource set having a function of a codebook for a terminal is determined. Each SRS resource set includes a plurality of SRS resources, and the plurality of SRS resources constitute an SRS resource group for uplink channel sounding and corresponding to 8 SRS antenna ports.

In this embodiment of the present invention, the PUSCH transmission performed by the terminal is codebook-based uplink transmission, and the network device may configure the plurality of SRS resources for the terminal to select SRS resource(s). The terminal sends a respective SRS according to SRS resource configuration information sent by the network device. The network device sends SRI, TPMI and transmitted rank indication (TRI) information to the terminal according to the received SRS. According to the SRI, the terminal may determine an SRS resource selected by a base station, thereby determining that the uplink transmission uses the same antenna or antenna port as used for SRS transmission corresponding to the SRS resource, that is, a corresponding spatial filtration beam (an analog beam). Through the TPMI and TRI information for the SRS resource corresponding to the SRI, the terminal may further determine the precoding and the numeric count of transmission layers for the uplink PUSCH transmission.

In order to support the codebook-based 8-layer PUSCH transmission, the network device determines at least one SRS resource set with the same function as "codebook" for the terminal. In this configuration, when the terminal selects the resource(s) used for PUSCH transmission, selection may be made from multiple SRS resource groups corresponding to 8 ports, and different SRS resource groups correspond to different spatial filtration beams sent by the terminal. Different SR resource groups may be configured with different resource types. An SRS resource group corresponds to an SRS resource set, and SRS resource types contained in the group are the same. Specifically, they may be periodic SRS resources, semi-persistent SRS resources, or aperiodic SRS resources, which are used to adapt to different base station scheduling requirements.

In step S202: an SRS resource indication (SRI) is sent to the terminal. The SRI indicates a spatial filtration beam used for PUSCH transmission corresponding to an SRS resource set of the at least one SRS resource set.

In this embodiment of the present invention, in the codebook-based PUSCH transmission, the network device configures the plurality of SRS resource sets for the codebook-based uplink transmission, and each SRS resource set may be configured with the plurality of SRS resources. The network device will feed back the SRI to the terminal, indicating the selected SRS resource set through the SRI. Data in pending uplink transmission of the terminal needs to be precoded using the PMI and the RI specified by the network side. The precoded data is mapped to an antenna port according to a spatial filter SpatialRelationInfo corresponding to an SRS resource set indicated by the SRI. Different SRS resource sets correspond to different spatial filters. Therefore, the precoded data of the terminal is filtered by the spatial filter corresponding to the SRS resource set indicated by the SRI.

By implementing the embodiments of the present application, the network device determines at least one SRS resource set with the same function as "codebook", and the SRS resource group containing multiple SRS resources for PUSCH transmission is indicated to the terminal via the SRI, to realize support of the codebook-based PUSCH transmission in the case of 8 SRS ports. The 8-port SRS function is realized by utilizing a combination of the existing SRS resource(s), thus avoiding defining a new 8-port SRI mapping table, and reducing standardization difficulty and workload.

Referring to FIG. 3, FIG. 3 is a flowchart of a precoding indication method for supporting 8Tx codebook-based PUSCH transmission provided by an embodiment of the present invention. The method is performed by the network device. As shown in FIG. 3, the method includes, but is not limited to, the following step.

In step S301, capability information of the terminal sent by the terminal is obtained. The at least one SRS resource set is determined according to the capability information of the terminal.

In this embodiment of the present invention, the terminal reports the capability information of the terminal to the network device for consideration by the network device, so as to configure the SRS resource set for the terminal that conforms to the capability information of the terminal.

Optionally, the capability information of the terminal is a capability of an antenna in the terminal to perform coherent transmission, including full coherent, partial coherent or non-coherent.

In an embodiment of the present invention, three antenna coherent transmission capabilities of the terminal are defined as follows.

Full coherent: all antennas of the terminal are able to perform coherent transmission.

Partial coherent: antennas within one coherent transmission pair of terminals are able to perform coherent transmission, but antennas in different coherent transmission pairs cannot perform coherent transmission.

Non-coherent: the terminal has no antenna for coherent transmission.

Optionally, the plurality of SRS resources include one or more of: a single-port SRS resource; a 2-port SRS resource; or a 4-port SRS resource.

In this embodiment of the present invention, the existing SRS resource definition includes the above three port numbers. SRS resources with different port numbers are combined to form an 8-port SRS resource to support the 8Tx codebook-based PUSCH transmission for the terminal, which avoids defining 8-port SRS and may configure SRS resources more flexibly.

Optionally, the plurality of SRS resources includes one of: a combination of two 4-port SRS resources; a combination of one 4-port SRS resource and two 2-port SRS resources; a combination of four 2-port SRS resources; or a combination of eight single-port SRS resources.

In this embodiment of the present invention, a possible 8-port SRS resource combination may include a first combination of one 4-port SRS resource and one 4-port SRS resource; a second combination of one 4-port SRS resource, one 2-port SRS resource and one 2-port SRS resource; a third combination of one 2-port SRS resource, one 2-port SRS resource, one 2-port SRS resource, and one 2-port SRS resource; or a fourth combination of eight single-port SRS resources.

With the above combination, SRS resources of the existing type(s) can be combined to form an 8-port SRS.

In a possible embodiment, the antennas in the terminal are fully coherent, and any combination of SRS resources can be configured.

In a possible embodiment, not all antennas in the terminal are fully coherent, where the following two situations may happen.

If every 4 antennas in the 8 antennas constitute a coherent antenna group and the two groups of antennas are not coherent, it corresponds to a partial coherent antenna configuration. In this case, it tends to configure two 4-port SRS resources to form an 8-port SRS resource group.

Similarly, if every 2 antennas constitute a coherent antenna group, the 4 antenna groups are not coherent, and the antennas in each antenna group are coherent, it also corresponds to a partial coherent antenna configuration. In this case, four 2-port SRS resources are configured to form an 8-port SRS resource group.

Referring to FIG. 4, FIG. 4 is a flowchart of a precoding indication method for supporting 8Tx codebook-based PUSCH transmission provided by an embodiment of the present invention. The method is performed by a network device. As shown in FIG. 4, the method includes, but is not limited to, the following step.

In step S401, an SRI table is sent to the terminal. The SRI table includes a correspondence between an SRI and an SRS resource set, and a numeric count of bits of an SRI indication field of the SRI is determined by $N_{SRS}$ representing a numeric count of SRS resource sets configured for the terminal.

In this embodiment of the present invention, when the network device performs indication via the SRI, it may directly indicate an index in the SRI table in line with a corresponding configuration, and the terminal obtains the indicated SRS resource set by looking up the table.

In a possible embodiment, the network device configures two SRS resource sets for the terminal, that is, $N_{SRS}$ =2, where a type of SRS resource combination in a first SRS resource set is the first combination, which contains two 4-port SRS resources, and a type of SRS resource combination in a second SRS resource set is the second combination, which contains one 4-port SRS resource and two 2-port SRS resources. The network device may configure these two SRS resource sets for the terminal by two SRIs. Since the numeric count of bits in the SRI indication field corresponding to the SRI is determined by $N_{SRS}$, the terminal may search for an SRI table corresponding to $N_{SRS}$=2 according to these two SRIs, for example, Table 1 as described above. SRI table is a predefined table, which includes a correspondence between an SRI index and an SRS resource of an SRS resource set. In this embodiment, when the SRI index is 0, it corresponds to an SRS resource group configured in the first SRS resource set, and when the SRI index is 1, it corresponds to an SRS resource group configured in the second SRS resource set.

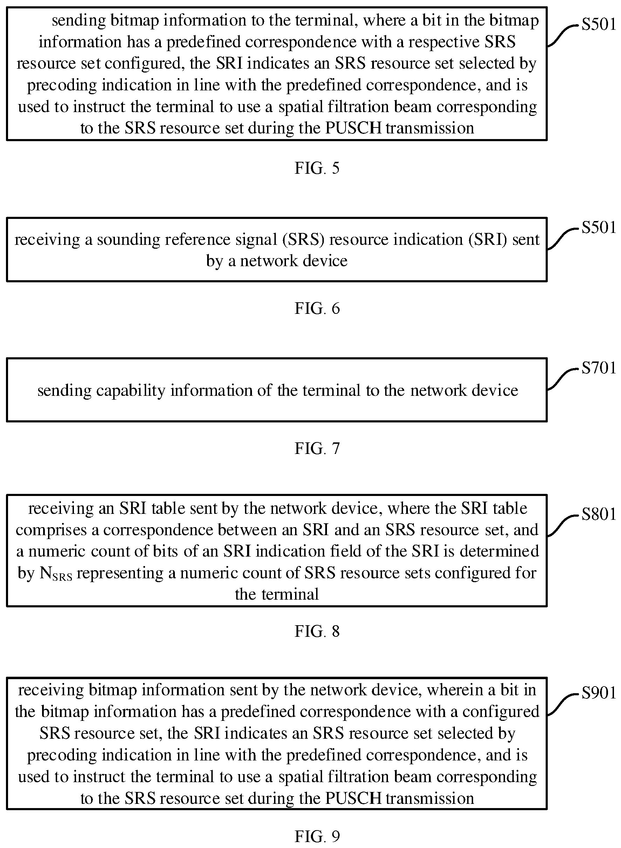

Referring to FIG. 5, FIG. 5 is a flowchart of a precoding indication method for supporting 8Tx codebook-based PUSCH transmission provided by an embodiment of the present invention. The method is performed by a network device.

As shown in FIG. 5, the method includes, but is not limited to, the following step.

In step S501, sending bitmap information to the terminal, where a bit in the bitmap information has a predefined correspondence with a respective SRS resource set configured, the SRI indicates an SRS resource set selected by precoding indication in line with the predefined correspondence, and is used to instruct the terminal to use a spatial filtration beam corresponding to the SRS resource set during the PUSCH transmission.

Optionally, a numeric count of bits of the SRI indication field is determined by $N_{SRS}$ representing a numeric count of SRS resource sets configured for the terminal.

Optionally, the plurality of SRS resource sets each are configured as one of: a periodic SRS resource set; a semi-persistent SRS resource set; or an aperiodic SRS resource set.

In a possible embodiment, the network device configures three SRS resource sets for the terminal, that is, $N_{SRS}$=3, where a type of SRS resource combination in a first SRS resource set is the first combination, which contains two 4-port SRS resources, a type of SRS resource combination in a second SRS resource set is the second combination, which contains one 4-port SRS resource and two 2-port SRS resources, and a type of SRS resource combination in a third SRS resource set is the third combination, which contains four 2-port SRS resources. The network device configures these three SRS resource sets for the terminal through three SRIs. Since the numeric count of bits in the SRI indication field corresponding to the SRI is determined by $N_{SRS}$, the terminal may search for an SRI table corresponding to $N_{SRS}$=3 according to these three SRIs, for example, Table 2 as described above. SRI table is a predefined table, which includes a correspondence between an SRI index and an SRS resource of an SRS resource set. In this embodiment, when the SRI index is 0, it corresponds to an SRS resource group configured in the first SRS resource set, when the SRI index is 1, it corresponds to an SRS resource group configured in the second SRS resource set, and when the SRI index is 2, it corresponds to an SRS resource group configured in the third SRS resource set.

In a possible embodiment, the network device configures two SRS resource sets for the terminal, that is, $N_{SRS}$ =2, where a type of SRS resource combination in a first SRS resource set is the third combination, which contains four 2-port SRS resources, and a type of SRS resource combination in a second SRS resource set is the fourth combination, which contains eight single-port SRS resources. The network device configures these two SRS resource sets for the terminal through two SRIs. The network device numbers the first SRS resource set and the second SRS resource set respectively, and the numbers are the bitmap information. After receiving the bitmap information, the terminal searches for corresponding TPMI and RI in a preconfigured table based on the coherent transmission capability of the antenna of the terminal and the bitmap information. If the terminal has 4 antenna ports and the transmission layer number is 1, a corresponding table is the above-mentioned Table 4. Table 4 shows TPMIs and RIs corresponding to the terminal with 4 antenna ports. If the antennas of the terminal may perform coherent transmission, that is, the antennas are fully coherent, and the bitmap information of the first SRS resource set allocated to the terminal is 0, a corresponding TPMI = 0 as shown in Table 4. A codebook (i.e., the above Table 5) corresponding to 4-antenna single-layer transmission is queried to require an SRS resource corresponding to TPMI = 0. On this basis, SRS resource(s) of the first SRS resource set configured by the network device for the terminal is obtained.

Referring to FIG. 6, FIG. 6 is a flowchart of a precoding indication method for supporting 8Tx codebook-based PUSCH transmission provided by an embodiment of the present invention. The method is performed by a terminal. As shown in FIG. 6, the method includes, but is not limited to, the following step.

In step S601, an SRS resource indication (SRI) sent by a network device is received. The SRI indicates a spatial filtration beam used for PUSCH transmission corresponding to an SRS resource set of at least one SRS resource set.

In this embodiment of the present invention, in the codebook-based PUSCH transmission, the network device configures the plurality of SRS resource sets for the codebook-based uplink transmission, and each SRS resource set may be configured with the plurality of SRS resources. The network device will feed back the SRI to the terminal, indicating the selected SRS resource set through the SRI. Data in pending uplink transmission of the terminal needs to be precoded using the PMI and the RI specified by the network side. The precoded data is mapped to an antenna port according to a spatial filter corresponding to an SRS resource set indicated by the SRI. Different SRS resource sets correspond to different spatial filters. Therefore, the precoded data of the terminal is filtered by the spatial filter corresponding to the SRS resource set indicated by the SRI.

By implementing the embodiments of the present application, the network device determines at least one SRS resource set with the same function as "codebook", and the SRS resource group containing multiple SRS resources for PUSCH transmission is indicated to the terminal via the SRI, to realize support of the codebook-based PUSCH transmission in the case of 8 SRS ports. The 8-port SRS function is realized by utilizing a combination of the existing SRS resource(s), thus avoiding defining a new 8-port SRI mapping table, and reducing standardization difficulty and workload.

Referring to FIG. 7, FIG. 7 is a flowchart of a precoding indication method for supporting 8Tx codebook-based PUSCH transmission provided by an embodiment of the present invention. The method is performed by the terminal. As shown in FIG. 7, the method includes, but is not limited to, the following step.

In step S701, capability information of the terminal is sent to the network device. The at least one SRS resource set is determined according to the capability information of the terminal.

In this embodiment of the present invention, the terminal reports the capability information of the terminal to the network device for consideration by the network device, so as to configure the SRS resource set for the terminal that conforms to the capability information of the terminal.

Optionally, the capability information of the terminal includes full coherent, partial coherent or non-coherent.

Referring to FIG. 8, FIG. 8 is a flowchart of a precoding indication method for supporting 8Tx codebook-based PUSCH transmission provided by an embodiment of the present invention. The method is performed by the terminal. As shown in FIG. 3, the method includes, but is not limited to, the following step.

In step S801, an SRI table sent by the network device is received. The SRI table includes a correspondence between an SRI and an SRS resource set, and a numeric count of bits of an SRI indication field of the SRI is determined by $N_{SRS}$ representing a numeric count of SRS resource sets configured for the terminal.

In this embodiment of the present invention, when the network device performs indication via the SRI, it may directly indicate an index in the SRI table in line with a corresponding configuration, and the terminal obtains the indicated SRS resource set by looking up the table.

Referring to FIG. 9, FIG. 9 is a flowchart of a precoding indication method for supporting 8Tx codebook-based PUSCH transmission provided by an embodiment of the present invention. The method is performed by the terminal. As shown in FIG. 9, the method includes, but is not limited to, the following step.

Bitmap information sent by the network device is received. A bit in the bitmap information has a predefined correspondence with a configured SRS resource set, the SRI indicates an SRS resource set selected by precoding indication in line with the predefined correspondence, and is used to instruct the terminal to use a spatial filtration beam corresponding to the SRS resource set during the PUSCH transmission.

Optionally, a numeric count of bits of the SRI indication field is determined by $N_{SRS}$ representing a numeric count of SRS resource sets configured for the terminal.

Optionally, the plurality of SRS resource sets each are configured as one of: a periodic SRS resource set; a semi-persistent SRS resource set; or an aperiodic SRS resource set.

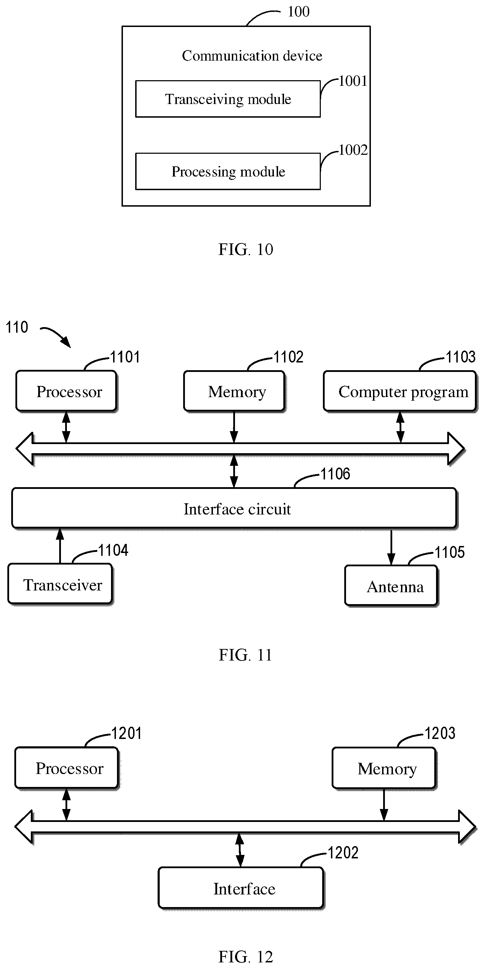

Referring to FIG. 10, FIG. 10 is a block diagram of a communication device provided by an embodiment of the present invention. The communication device 100 shown in FIG. 10 may include a transceiving module 1001 and a processing module 1002. The transceiving module 1001 may include a sending module and/or a receiving module. The sending module is configured to implement a sending function, and the receiving module is configured to implement a receiving function. The transceiving module 1001 may implement the sending function and/or the receiving function.

The communication device 100 may be a terminal (such as the terminal in the foregoing method embodiments), a device in the terminal, or a device that may be used in conjunction with the terminal. Alternatively, the communication device 100 may be a network device, a device in a network device, or a device that may be used in conjunction with the network device.

The communication device 100 is a network device, including a first configuration module configured to configure N single-port SRS resources corresponding to non-codebook-based PUSCH transmission for a maximum of 4 layers or more for the terminal, where N is a positive integer greater than 4 and less than or equal to 8; a second configuration module configured to configure the N SRS resources into at least two SRS resource sets, where each SRS resource set includes a maximum of 4 SRS resources; and a transceiver module configured to send an SRI to the terminal, where the SRI indicates at least one SRS resource of the configured N SRS resources, and the PUSCH utilizes the at least one SRS resource indicated by the SRI, and is sent using the same precoding.

FIG. 11 is a block diagram of a communication device 110 provided by another embodiment of the present invention. The communication device 110 may be a network device, or a terminal (such as the terminal in the aforementioned method embodiments), or may be a chip, a chip system, or a processor that supports the network device to implement the above method, or may be a chip, a chip system, or a processor that supports the terminal to implement the above method. The device may be configured to implement the methods described in the above method embodiments, and the details may be referred to the description corresponding to the above method embodiments.

The communication device 110 may include at least one processor 1101. The processor 1101 may be a general-purpose processor or a special-purpose processor. For example, it may be a baseband processor or a central processing unit. The baseband processor may be configured to process communication protocols and communication data, and the central processing unit may be configured to control the communication device (such as a base station, a baseband chip, a terminal, a terminal chip, a DU or a CU), execute computer program(s), and process data for the computer program(s).

Optionally, the communication device 110 may further include at least one memory 1102, on which a computer program 1103 may be stored, and the processor 1101 may execute the computer program 1103 to cause the communication device 110 to perform the method as described in the above method embodiments. Optionally, the memory 1102 may also have the data stored therein. The communication device 110 and the memory 1102 may be provided independently or integrated together.

Optionally, the communication device 110 may further include a transceiver 1104 and an antenna 11010. The transceiver 1104 may be referred to as a transceiving unit, a transceiver, or a transceiving circuit or the like for implementing a transceiving function. The transceiver 1104 may include a receiver and a transmitter, and the receiver may be referred to as a receiver or a receiving circuit or the like for implementing a receiving function; the transmitter may be referred to as a transmitter or a transmission circuit or the like for implementing a transmission function.

Optionally, the communication device 110 may further include one or more interface circuits 11011. The interface circuit 11011 is configured to receive and transmit the code instruction to the processor 1101. The processor 1101 executes the code instruction to enable the communication device 110 to perform the method described in any of the above method embodiments.

The communication device 110 is a terminal (such as the terminal in the aforementioned method embodiments). The processor 1101 is configured to execute step S202 in FIG. 2, step S302 in FIG. 3a, step S402 in FIG. 4, step S1002 in FIG. 10, or step S1104 in FIG. 11. The transceiver 1104 is configured to perform step S1101 in FIG. 11.

The communication device 110 is a network device. The transceiver 1104 is configured to perform step S201 in FIG. 2, step S301 in FIG. 3a, step S401 in FIG. 4, step S1001 in FIG. 10, or step S1103 in FIG. 11. The processor 1101 is configured to execute step S1102 in FIG. 11.

In an embodiment, the processor 1101 may further include the transceiver for implementing receiving and transmitting functions. For example, the transceiver may be a transceiving circuit, or an interface, or an interface circuit. The transceiving circuit, interface, or interface circuit for implementing the receiving and transmitting functions may be separate or integrated. The transceiving circuit, interface or interface circuit may be configured to read and write code/data, or the transceiver circuit, interface or interface circuit may be configured for transmission or transfer of signal.

In an embodiment, the processor 1101 may store a computer program 1103 that, when run on the processor 1101, enables the communication device 110 to perform the method described in any of the above method embodiments. The computer program 1103 may be solidified in the processor 1101, in which case the processor 1101 may be implemented in hardware.

In an embodiment, the communication device 110 may include a circuit that may perform the functions of transmitting or receiving or communicating in the foregoing method embodiments. The processor and transceiver described in the present invention may be implemented on an integrated circuit (IC), an analog IC, a radio frequency integrated circuit (RFIC), a mixed signal IC, an application specific integrated circuit (ASIC), a printed circuit board (PCB), an electronic device, etc. The processor and transceiver may also be fabricated with various IC process technologies such as complementary metal oxide semiconductor (CMOS), n-metal-oxide-semiconductor (NMOS), positive channel metal oxide semiconductor (PMOS), bipolar junction transistor (BJT), bipolar CMOS (BiCMOS), silicon germanium (SiGe), gallium arsenide (GaAs), etc.

The communication device in the above embodiments may be the network device or the terminal (such as the terminal in the aforementioned method embodiments), but the scope of the communication device described in the present invention is not limited thereto and the construction of the communication device is not limited by FIG. 11. The communication device may be a stand-alone device or may be a part of a larger device. For example, the communication device may be: (1) a stand-alone integrated circuit (IC), or a chip, or a chip system or a subsystem; (2) a set of one or more ICs, optionally the set of ICs may also include a storage component for storing the data and the computer program; (3) ASIC such as modem; (4) modules that may be embedded in other devices; (5) a receiver, a terminal device, an intelligent terminal device, a cellular phone, a wireless device, a handset, a mobile unit, an on-vehicle device, a network device, a cloud device, an artificial intelligence device, etc.; (6) others.

In a case where the communication device may be the chip or the chip system, a block diagram of the chip shown in FIG. 12 may be referred to. The chip shown in FIG. 12 may include a processor 1201 and an interface 1202. There may be at least one processor 1201 and multiple interfaces 1202.

In a case where the chip is configured to realize functions of the terminal in the embodiments of the present invention, optionally, the chip further includes a memory 1203 for storing necessary computer programs and data.

Those skilled in the art may further appreciate that the various illustrative logical blocks and steps described in embodiments of the present invention may be implemented in electronic hardware, computer software, or combinations of both. Whether such functionality is implemented as hardware or software depends upon particular application and design requirement of the overall system. Those skilled in the art may implement the described functionality in varying ways for each particular application, but such implementation should not be understood as exceeding the scope of protection of embodiments of the present invention.

The embodiments of the present invention further provides a precoding indication system for supporting 8Tx codebook-based PUSCH transmission. The system includes the communication device as the terminal (such as the terminal in the foregoing method embodiments) and the communication device as the network device in the aforementioned embodiment shown in FIG. 10, or the system includes the communication device as the terminal (such as the terminal in the foregoing method embodiments) and the communication device as the network device in the aforementioned embodiment shown in FIG. 11. The present invention further provides a readable storage medium storing thereon instructions that, and when executed by a computer, cause functions of any one of the above method embodiments to be realized.

The present invention further provides a computer program product that, when executed by the computer, cause functions of any one of the above method embodiments to be realized.

In the above embodiments, the present invention may be implemented in whole or in part by hardware, software, firmware or their combination. When implemented in software, the present invention may be implemented in whole or in part as the computer program product. The computer program product includes one or more computer programs. The computer programs, when loaded and executed on the computer, result in whole or in part in processes or functions according to embodiments of the present invention. The computer may be a general-purpose computer, a special-purpose computer, a computer network, or other programmable devices. The computer program may be stored in a computer-readable storage medium or transmitted from one computer-readable storage medium to another, for example, the computer program may be transmitted from one website, computer, server, or data center to another website, computer, server, or data center by wire (e.g. coaxial cable, fiber optic, digital subscriber line (DSL)) or wirelessly (e.g. infrared, wireless, microwave, etc.). The computer-readable storage medium may be any available medium that may be accessed by the computer or a data storage device, such as a server, a data center, etc., that includes one or more available media. The available medium may be a magnetic medium (e.g. a floppy disk, a hard disk, a magnetic tape), an optical medium (e.g. a high-density digital video disc (DVD)), or a semiconductor medium (e.g. a solid state disk (SSD)), etc.

Those skilled in the art may appreciate that the first, second, and other numerical numbers involved in the present invention are merely for convenience of description and are not intended to limit the scope of embodiments of the present invention, which also represent a sequential order.

"At least one" in the present invention may also be described as one or more, and "multiple" may be two, three, four, or more, and the present invention is not limited thereto. In embodiments of the present invention, regarding one technical feature, the technical features in the technical feature are distinguished by "first", "second", "third", "A", "B", "C" and "D", etc. and there is no order of precedence or order of magnitude between the technical features described by the "first", "second", "third", "A", "B", "C" and "D".

Correspondence shown in tables in the present invention may be configured or predefined. Values of information in each table are merely examples, and may be configured as other values, which is not limited in the present invention. In a case of configuring the correspondence between the information and each parameter, it is not necessarily required that all the correspondences shown in each table must be configured. For example, the correspondence shown in certain rows in the tables in the present invention may not be configured. As another example, appropriate deformation adjustments may be made based on the above table, such as splitting, merging, etc. Names of the parameters shown in titles of the above tables may also be other names understandable by the communication device, and the values or expressions of the parameters may also be other values or expressions understandable by the communication device. The above-mentioned tables may also be implemented using other data structures, for example, an array, a queue, a container, a stack, a linear table, a pointer, a linked list, a tree, a graph, a structure, a class, a heap, a hash table or a hash table.

"Predefined" in the present invention may be understood as determined, predetermined, stored, pre-stored, pre-negotiated, pre-configured, cured, or pre-fired.

Those skilled in the art may appreciate that units and algorithm steps of each example described in conjunction with embodiments disclosed herein may be implemented with electronic hardware, or combinations of computer software and electronic hardware. Whether such functionality is implemented in hardware or software depends on the specific application and design constraints of the technical solution. Those skilled in the art may implement the described functionality in varying ways for each particular application, but such implementation should not be considered to be beyond the scope of the present invention.

It will be clear to those skilled in the art that, for convenience and brevity of the description, specific working procedures of the above described systems, devices and units may be referred to corresponding procedures in the preceding method embodiments and will not be described in detail here.

The above description is only for the specific embodiments of the present invention, but the scope of the present invention is not limited thereto. Any person skilled in the art may easily think of changes or substitutions within the technical scope of the present invention, which shall be covered by the protection scope of the present invention. Therefore, the protection scope of the present application shall be in line with the attached claims.

## Claims

1. A precoding indication method for supporting 8Tx codebook-based physical uplink shared channel (PUSCH) transmission, performed by a network device, comprising:

   determining at least one sounding reference signal (SRS) resource set having a function of a codebook for a terminal, wherein each SRS resource set comprises a plurality of SRS resources, and the plurality of SRS resources constitute an SRS resource group for uplink channel sounding and corresponding to 8 SRS antenna ports; and

sending an SRS resource indication (SRI) to the terminal, wherein the SRI indicates a spatial filtration beam used for PUSCH transmission corresponding to an SRS resource set of the at least one SRS resource set.

2. The method according to claim 1, further comprising:
obtaining capability information of the terminal sent by the terminal, wherein the at least one SRS resource set is determined according to the capability information of the terminal.

3. The method according to claim 2, wherein the capability information of the terminal comprises full coherent, partial coherent or non-coherent.

4. The method according to claim 1, wherein the plurality of SRS resources comprise one or more of:

a single-port SRS resource;
a 2-port SRS resource; or
a 4-port SRS resource.

5. The method according to claim 4, wherein each SRS resource of the plurality of SRS resources comprises a combination of SRS resources with the same port numeric count, or a combination of SRS resources with different port numeric counts.

6. The method according to claim 4, wherein the plurality of SRS resources comprise one of:

a combination of two 4-port SRS resources;
a combination of one 4-port SRS resource and two 2-port SRS resources;
a combination of four 2-port SRS resources; or
a combination of eight single-port SRS resources.

7. The method according to claim 1, further comprising:
sending an SRI table to the terminal, wherein the SRI table comprises a correspondence between an SRI and an SRS resource set, and a numeric count of bits of an SRI indication field of the SRI is determined by $N_{SRS}$ representing a numeric count of SRS resource sets configured for the terminal.

8. The method according to claim 1, further comprising:
sending bitmap information to the terminal, wherein a bit in the bitmap information has a predefined correspondence with a respective SRS resource set configured, the SRI indicates an SRS resource set selected by precoding indication in line with the predefined correspondence, and is used to instruct the terminal to use a spatial filtration beam corresponding to the SRS resource set during the PUSCH transmission.

9. The method according to claim 8, wherein a numeric count of bits of an SRI indication field is determined by $N_{SRS}$ representing a numeric count of SRS resource sets configured for the terminal.

10. The method according to claim 8, wherein the plurality of SRS resource sets each are configured as one of:

a periodic SRS resource set;
a semi-persistent SRS resource set; or
an aperiodic SRS resource set.

11. A precoding indication method for supporting 8Tx codebook-based physical uplink shared channel (PUSCH) transmission, performed by a terminal, comprising:
receiving a sounding reference signal (SRS) resource indication (SRI) sent by a network device, wherein the SRI indicates a spatial filtration beam used for PUSCH transmission corresponding to an SRS resource set of at least one SRS resource set.

12. The method according to claim 11, further comprising:
sending capability information of the terminal to the network device, wherein the at least one SRS resource set is determined according to the capability information of the terminal.

13. The method according to claim 12, wherein the capability information of the terminal comprises full coherent, partial coherent or non-coherent.

14. The method according to claim 11, further comprising:
   receiving an SRI table sent by the network device, wherein the SRI table comprises a correspondence between an SRI and an SRS resource set, and a numeric count of bits of an SRI indication field of the SRI is determined by $N_{SRS}$ representing a numeric count of SRS resource sets configured for the terminal.

15. The method according to claim 11, further comprising:
   receiving bitmap information sent by the network device, wherein a bit in the bitmap information has a predefined correspondence with a configured SRS resource set, the SRI indicates an SRS resource set selected by precoding indication in line with the predefined correspondence, and is used to instruct the terminal to use a spatial filtration beam corresponding to the SRS resource set during the PUSCH transmission.

16. The method according to claim 15, wherein a numeric count of bits of an SRI indication field is determined by $N_{SRS}$ representing a numeric count of SRS resource sets configured for the terminal.

17. The method according to claim 15, wherein the plurality of SRS resource sets each are configured as one of:

   a periodic SRS resource set;
   a semi-persistent SRS resource set; or
   an aperiodic SRS resource set.

18. A precoding indication apparatus for supporting 8Tx codebook-based physical uplink shared channel (PUSCH) transmission, applied to a network device, comprising:

   a processing module configured to determine at least one sounding reference signal (SRS) resource set having a function of a codebook for a terminal, wherein each SRS resource set comprises a plurality of SRS resources, and the plurality of SRS resources constitute an SRS resource group for uplink channel sounding and corresponding to 8 SRS antenna ports; and
   a first transceiving module configured to send an SRS resource indication (SRI) to the terminal, wherein the SRI indicates a spatial filtration beam used for PUSCH transmission corresponding to an SRS resource set of the at least one SRS resource set.

19. A precoding indication apparatus for supporting 8Tx codebook-based physical uplink shared channel (PUSCH) transmission, applied to a terminal, comprising:
   a second transceiving module configured to receive a sounding reference signal (SRS) resource indication (SRI) sent by a network device, wherein the SRI indicates a spatial filtration beam used for PUSCH transmission corresponding to an SRS resource set of at least one SRS resource set.

20. A communication device, comprising: a processor and a memory having stored therein a computer program that, when executed by the processor, causes the device to perform the method according to any one of claims 1 to 10 or claims 11 to 17.

21. A communication device, comprising: a processor and an interface circuit, wherein

   the interface circuit is configured to receive code instructions and transmit them to the processor, and
   the processor is configured to run the code instructions to perform the method according to any one of claims 1 to 10 or claims of 11 to 17.

22. A computer-readable storage medium having stored therein instructions that, when executed, cause the method according to any one of claims 1 to 10 or claims of 11 to 17 to be implemented.

101

Network device

102

Terminal

FIG. 1

determining at least one sounding reference signal (SRS) resource set having a function of a codebook for a terminal `—S201`

sending an SRS resource indication (SRI) to the terminal `—S202`

FIG. 2

obtaining capability information of the terminal sent by the terminal `—S301`

FIG. 3

sending an SRI table to the terminal, where the SRI table comprises a correspondence between an SRI and an SRS resource set, and a numeric count of bits of an SRI indication field of the SRI is determined by $N_{SRS}$ representing a numeric count of SRS resource sets configured for the terminal `—S401`

FIG. 4

sending bitmap information to the terminal, where a bit in the bitmap information has a predefined correspondence with a respective SRS resource set configured, the SRI indicates an SRS resource set selected by precoding indication in line with the predefined correspondence, and is used to instruct the terminal to use a spatial filtration beam corresponding to the SRS resource set during the PUSCH transmission

S501

FIG. 5

receiving a sounding reference signal (SRS) resource indication (SRI) sent by a network device

S501

FIG. 6

sending capability information of the terminal to the network device

S701

FIG. 7

receiving an SRI table sent by the network device, where the SRI table comprises a correspondence between an SRI and an SRS resource set, and a numeric count of bits of an SRI indication field of the SRI is determined by $N_{SRS}$ representing a numeric count of SRS resource sets configured for the terminal

S801

FIG. 8

receiving bitmap information sent by the network device, wherein a bit in the bitmap information has a predefined correspondence with a configured SRS resource set, the SRI indicates an SRS resource set selected by precoding indication in line with the predefined correspondence, and is used to instruct the terminal to use a spatial filtration beam corresponding to the SRS resource set during the PUSCH transmission

S901

FIG. 9

100

Communication device

Transceiving module ⌐1001

Processing module ⌐1002

FIG. 10

110

⌐1101 Processor

⌐1102 Memory

⌐1103 Computer program

⌐1106 Interface circuit

⌐1104 Transceiver

⌐1105 Antenna

FIG. 11

⌐1201 Processor

⌐1203 Memory

⌐1202 Interface

FIG. 12

## INTERNATIONAL SEARCH REPORT

| International application No. |
| --- |
| **PCT/CN2022/112320** |

### A. CLASSIFICATION OF SUBJECT MATTER

H04W72/04(2023.01)i

According to International Patent Classification (IPC) or to both national classification and IPC

### B. FIELDS SEARCHED

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

CNABS; CNTXT; VEN; EPTXT; USTXT; WOTXT; CNKI; 3GPP: 码本, 物理上行共享信道, 探测参考信号, 资源集合, 资源指示, 空间滤波, 8, 端口, 8TX, SRS, SRI, PUSCH, port, codebook, resource, set, enhancement, sounding resource indicator, sounding reference signal

### C. DOCUMENTS CONSIDERED TO BE RELEVANT

| Category* | Citation of document, with indication, where appropriate, of the relevant passages | Relevant to claim No. |
| --- | --- | --- |
| Y | CN 108093480 A (ZTE CORP.) 29 May 2018 (2018-05-29) description, paragraphs [0431]-[0434] | 1-22 |
| A | CN 110800353 A (OPPO GUANGDONG MOBILE TELECOMMUNICATIONS CORP., LTD.) 14 February 2020 (2020-02-14) entire document | 1-22 |
| Y | HUAWEI et al. "Discussion on SRI/TPMI Enhancement for Enabling 8 TX UL Transmission" *3GPP TSG RAN WG1 Meeting #109-e R1-2203155*, 29 April 2022 (2022-04-29), sections 2-4 | 1-22 |
| Y | CATT. "On SRI/TPMI Enhancement for UL 8 TX" *3GPP TSG RAN WG1 Meeting #109-e R1-2203447*, 29 April 2022 (2022-04-29), section 2 | 1-22 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **09 March 2023** | **16 April 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**
Information on patent family members

International application No.

**PCT/CN2022/112320**

| Patent document cited in search report | | | Publication date (day/month/year) | Patent family member(s) | Publication date (day/month/year) |
|---|---|---|---|---|---|
| CN | 108093480 | A | 29 May 2018 | None | |
| CN | 110800353 | A | 14 February 2020 | None | |

Form PCT/ISA/210 (patent family annex) (July 2022)